# EUROPEAN PATENT APPLICATION

(11) **EP 1 528 772 A1**
(43) Date of publication of application: **04.05.2005**
(21) Application number: 03738672.9
(22) Date of filing: 03.07.2003
(51) Int. Cl.: H04M 3/00, H04Q 7/38

(54) **MOBILE TELEPHONE SYSTEM USING LOCAL COMMUNICATION NETWORK**

(30) Priority: 05.07.2002 JP 2002197774; 09.12.2002 JP 2002357306
(71) Applicant: SHOW ENGINEERING INC., Minato-ku, Tokyo 105-0014 (JP)
(72) Inventor: WAKAMATSU, Michio, Hachiouji-shi, Tokyo 192-0015 (JP)
(74) Representative: Chettle, Adrian John
(86) International application number: PCT/JP2003/008501
(87) International publication number: WO 2004/006552

(57) **Abstract**

A mobile telephone (10) system includes connection control devices (PBX) (22, 32) arranged in a plurality of local communication networks (20, 30), an integration exchange server (12) connected via the connection control devices (22, 32) and the private Internet network, communication stations (CS) (24-28, 34-38) functioning as PHS parent devices connected by a cable to the connection control devices (22, 32) in the local communication networks (20, 30), and mobile terminals (a to h) functioning as PHS child devices. Communication between the mobile terminals and the communication stations is not charged in the same way as the communication in the normal PHS self-support mode. Communication performed by using the existing local communication network between communication stations via the connection control device (22), the integration exchange server (12), and the connection control device (32) can be free or quite cheap since the Internet protocol communication is performed.

## Description

### TECHNICAL FIELD

The present invention relates to a mobile telephone system, and more particularly to a mobile telephone system using a plurality of local communication networks so that communication is carried out within the local communication network or between local communication networks via the Internet.

### BACKGROUND ART

Because of recent and continuing advances in communication technology through the Internet, various information such as texts, audios, and images can now be easily and quickly transmitted and received, while at the same time, connection to the Internet has progressed from the dial-up connection mode to the ADSL technology, which offers fulltime connection to an Internet network at low charges. Users can immediately obtain necessary information from any home page around the world. Moreover, the evolution of the Internet has made it possible for entities to offer their services to the public at large, including the sale of consumer items, the payment of bills and banking. Likewise, services provided by local governments can also be availed of through the Internet, that it has become an infrastructure indispensable to easing people's lives.

On the other hand, remarkable developments in communication technology have also come about, specially relating to mobile telephones. In this connection, competition among communication carriers is becoming more intense, that they must be able to provide such communication service with an electronic mail function, by which text data and various data files may be transmitted and received, as well as an Internet connection function known as the "i-mode" (a registered trade mark) in addition to the communication function, which is a basic function thereof. Further, communication carriers continue to come up with new services, thereby enhancing the performance and functions of mobile telephones.

As a result, communication devices, which heretofore were typified by personal computers used for obtaining connection to the Internet and various networks therein, as well as mobile telephones and fixed telephones (wired telephones), have transformed into devices which can provide a combination of the functions provided by each such device. For example, personal computers can now function as an Internet telephone, while mobile telephones can already perform the electronic mail function as well as provide access to the Internet. However, the cost burden that goes with obtaining access to and the use of such a wide range of services available in mobile telephones is quite high. Moreover, if the Internet telephone function is used on the personal computer, the place of installation remains fixed. Likewise, problems still abound with respect to the portability and mobility of notebook personal computers due to their weight and size.

Significantly, local governments and third sector systems are now operating local communication networks typified by the CATV network in various areas. The CATV service provides the distribution of contents closely related to the area, and contents with large data quantity such as movies. However, the services provided (applications) by the local communication networks such as the CATV are rather limited, such that the number of subscribers remains stagnant, while managing conditions are not necessarily sound.

Under these circumstances, therefore, the Internet telephone, which happens to offer low call charges, is attracting a great deal of interest, and accordingly, various sorts of applications to the mobile telephone have been proposed. As the third generation and fourth generation mobile telephone services have become practical, it is expected that the role played by the exchange connection system for mobile telephones using networks available on the Internet (the "Internet Network") will increasingly become important.

The exchange connection system for mobile telephones using the Internet network has been disclosed in Japanese Laid-Open Patent Publication No. 2000-308128) entitled "Internet Cordless Telephone System, Cordless Base and Cordless Handset for the System and Connection and Control Device" (hereinafter, "Patent Document 1").

The technology disclosed in Patent Document 1 relates to a system including a plurality of cordless bases which carry out communication functions using the Internet protocol, and one or more cordless handsets which carry out radio communication with cordless bases. This system comprises a cordless handset equipped with an upper layer processing section compliant with Internet protocol, and a lower layer processing section compliant with a radio communication protocol, and a connection control device that stores the addresses of the cordless handset, and the addresses of the cordless bases which communicate with the cordless handset, and controls connection and disconnection to and from the cordless handset via the cordless bases in compliance with Internet protocol.

The cordless handset then requests the connection control device for a location registration via the cordless base assigned to the area where the cordless handset is located, thereby setting the address of the handset in terms of Internet protocol to the connection control device, and intermittently waits for an incoming call to the handset from the cordless base by means of control employed by the lower layer processing section for such period until the incoming call reaches the handset from the cordless base after the address has been set.

However, the above telephone system requires compliance with certain conditions. First, the system sets up a fixed Internet communication network within offices, buildings, head offices, and branches, and between entire overseas offices and local carriers, deploys a plurality of PHS CELL STATION (hereinafter, "PHS-CS"), PHS PERSONAL STATION (hereinafter, "PHS-PS") and connection control devices, which include the upper layer compliant with Internet communication protocol and the lower layer compliant with radio communication protocol, and operates between the PHS-CS and PHS-PS in the private mode. Although this system enables the PHS-PS to receive/transmit a call at low call charges from the area where the PHS-CS is installed, it is rather disadvantageous because the extent to which the system can be constructed is limited to the determined set of Internet communication networks and the areas where the PHS-CS are located.

Secondly, the respective PHS-PS must hold IP addresses, and be concurrently equipped with the upper layer processing section compliant with Internet protocol in addition to the lower layer processing section used for communicating with the PHS-CS in compliance with radio communication protocol, thereby increasing the production cost of PHS-PS.

Thirdly, since the PHS-PS hold IP addresses in the system, the number of PHS-PS with which such service can be provided is accordingly restricted.

Fourthly, since the respective PHS-PS must be registered as PS for the PHS-CS in the system, all such PHS-PS must be registered as PS for all PHS-CS in order to communicate via the PHS-CS situated in different areas.

In order to make this system available not only in Japan but worldwide as well, it is necessary to install fixed Internet communication networks covering the entire area, to enable the installation of a large number of PHS-CS and PS and connection control devices that will manage the addresses of such devices and establish a link between them, thereby requiring an enormous amount of capital investment for construction. Moreover, it is necessary to add the function of the upper layer compliant with Internet protocol to the PHS-PS, and to add the function of PS registration for a large number of PHS-PS to PHS-CS. The provision for these functions is still necessary where an IP mobile telephone service is applied to a local communication network by means of a PHS telephone system such as an ADSL connection service network provided by an Internet provider.

Thus, the present invention aims to solve the foregoing problems of the prior technology, by providing a mobile telephone system which uses existing local communication networks to communicate with any location in Japan and the world via Internet networks at low communication charges without the need for a vast capital outlay, and to provide a mobile telephone system which would minimize the number of functions to be added to PHS-PS and PHS-CS, and yet be suitably adapted to local communication networks provided by Internet providers and the like.

### DISCLOSURE OF THE INVENTION

A description will now be given of the present invention devised to achieve the above objects. Elements of the present invention are designated by numerals marked by parentheses for easy association with the elements of the embodiments described below and are not intended to limit the scope of the present invention to these embodiments.

A mobile telephone system (10) using local communication networks according to the first embodiment of the present invention is constituted by connection control devices (22), (32) that are respectively installed on a plurality of local communication networks (20), (30), an integration exchange server (12) that is connected to the respective connection control devices (22), (32) via private Internet networks (14), (16), while a plurality of communication stations (24) to (28), (34) to (38) that are wire-connected to the respective connection control devices (22), (32) are installed along with subscriber terminals of the local communication networks (20), (30), and function as PHS-CS, and a plurality of mobile terminals (a) to (h) that serve as PHS-PS.

The mobile terminals (a) to (h) include a radio section and a communication section both of which carry out communication at least with the communication stations (24) to (28), (34) to (38) in compliance with radio communication protocol.

The respective communication stations (24) to (28), (34) to (38) include a location registration processing section that carries out location registration processing for mobile terminals located within the vicinity thereof, a radio communication protocol processing section that communicates with the mobile terminals in compliance with radio communication protocol, an Internet protocol processing section that communicates with the connection control device in compliance with Internet protocol.

The connection control devices (22), (32) include an Internet protocol processing section which holds an IP address on the Internet, and communicates with the respective communication stations and the integration exchange server in compliance with Internet protocol, and a connection control section which carries out connection control based on communication data from the communication stations or the integration exchange server.

In turn, the integration exchange server (12) includes a location information database which stores the IP addresses of the connection control devices, IP addresses of the respective communication stations, and location information on the respective mobile terminals, an Internet protocol processing section which communicates with the respective connection control devices in compliance with Internet protocol, and a connection control section that carries out connection control based on communication data emanating from the connection control devices, and carries out the function of connection control based on the location information on the mobile terminal obtained from the location information database in possession of the communication data.

According to the mobile telephone system using local communication networks, the call charge is free between the respective mobile terminals (a) to (h) and the respective communication stations (24) to (28) as in the ordinary PHS private mode, and is free or extremely low along the communication stations (24) to (28) → the connection control device (22) → the integration exchange server (12) → the connection control device (32) → the communication stations (34) to (38), since communication is carried out in compliance with Internet protocol using existing local communication networks.

Moreover, the mobile telephone system according to the present invention is characterized in that: the connection control devices (22), (32) further include a protocol converting section which converts the communication data from the communication stations (24) to (28), (34) to (38) or the integration exchange server (12) to data compliant with protocol on the PSTN, thereby causing the connection control section to connect with a call destination routing through a public line network, while the integration exchange server (12) is further configured so as to be connected to public Internet networks, and if the call destination is an Internet telephone, the connection control section can connect to the call destination routing through the public Internet networks, and the integration exchange server (12) is further configured so as to be connected to overseas exchanges installed by dedicated international line providers, such that if the call destination is a mobile telephone of a public line network subscriber, the connection control section can connect to the call destination routing through the public line network via the overseas exchanges.

According to the mobile telephone system, connection control can be carried out on a route with the lowest call charge depending on whether the telephone involved is the fixed telephone, the mobile telephone, or the Internet telephone of the subscriber of the public line network, respectively.

Moreover, according to the mobile telephone system of the present invention, the integration exchange server (12) is further connected to the integration exchange server (12) installed abroad via the private Internet networks. According to this configuration, it is possible to easily expand the area of service coverage, and to make international telephone calls as well as domestic telephone calls at extremely low charges. Moreover, according to the mobile telephone system of the present invention, by using the CATV communication network provided by a local communication network, mobile telephone service may be provided in addition to CATV service, as to attract more subscribers to the CATV service.

In addition, the mobile telephone system using local communication networks according to the second embodiment of the present invention is composed of connection control devices (80) which are installed on Internet networks serving as local communication networks (21), a plurality of communication stations (24) to (28) which are connected to the connection control devices (80) via the Internet networks, and function as PHS-CS, and a plurality of mobile terminals (a) to (d) which function as PHS-PS, and is characterized in that:
the mobile terminals (a) to (d) include a radio section and a communication section that carry out communication with the communication stations (24) to (28) at least in compliance with radio communication protocol,
the respective communication stations (24) to (28) include a location registration processing section that carries out location registration processing for the mobile terminals (a) to (d) located within the vicinity thereof, a radio communication protocol processing section that communicates with the mobile terminals (a) to (d) in compliance with radio communication protocol, an Internet protocol processing section that communicates with the connection control device (80) in compliance with Internet protocol, and
the connection control device (80) is provided with a location information database which stores the IP addresses of the communication stations (24) to (28), and location information on the respective mobile terminals, an Internet protocol processing section which communicates with the respective connection control devices (80) in compliance with Internet protocol, and a connection control section that carries out connection control according to communication data coming from the communication stations (24) to (28), and carries out connection control based on location information in the mobile terminals obtained from the location information database based on available communication data.

According to this configuration, by installing a large number of the communication stations (24) to (28), local communication network providers such as Internet providers can easily provide Internet telephone service at low cost.

The mobile telephone system according to the first and second embodiments is characterized in that: the respective communication stations (24) to (28), (34) to (38) further include an IP address managing section that manages a plurality of IP addresses which are assigned to the respective communication stations and are used for the mobile terminals (a) to (h) which are communicating via the corresponding communication stations, and the mobile terminals (a) to (h) further include a mode switching section, and if the mobile terminals should select the IP mode by means of the mode switching section, the mobile terminals will receive control channel information transmitted from the communication stations (24) to (28), (34) to (38) while such information is masked at predetermined bit positions.

According to the mobile telephone system of the present invention, since the PHS-PS equipped with the mobile terminals (a) to (h) do not require an upper layer compliant with Internet protocol, it is not necessary to register a large number of such PHS-PS to PHS-CS serving as the communication stations (24) to (28), (34) to (38), and at the same time, the number of the mobile terminals for IP addresses need not be limited, thereby providing a large number of mobile terminals with the service.

### BEST MODE FOR CARRYING OUT THE INVENTION

Fig. 1 is a diagram showing the schematic configuration of a mobile telephone system according to the first embodiment of the present invention. Fig. 2 is a diagram showing the configuration of a mobile terminal of a subscriber in the mobile telephone system illustrated in Fig. 1, while Fig. 3 is a diagram showing the configuration of a communication station in the mobile telephone system illustrated in Fig. 1.

Fig. 4 is a diagram showing the schematic configuration of a control channel frame in communication between the mobile terminals and the communication stations shown in Fig. 1. Fig. 5 is a diagram showing the configuration of a connection control device in the mobile telephone system illustrated in Fig. 1. Fig. 6 is a diagram showing the configuration of an integration exchange server in the mobile telephone system referred to in Fig. 1.

Fig. 7 is a diagram showing the schematic configuration of an extended mobile telephone system according to the embodiment shown in Fig. 1.

Fig. 8 is a diagram showing the schematic configuration of a mobile telephone system according to the second embodiment of the present invention. Fig. 9 is a diagram showing the configuration of a gatekeeper in the mobile telephone system shown in Fig. 8.

Fig. 10 is a diagram showing the system configuration which carries out a call between the mobile telephone system according to the first embodiment and the mobile telephone system according to the second embodiment.

Fig. 11 is a diagram showing the system configuration integrating the mobile telephone systems according to the first and second embodiments.

A detailed description will now be given of mobile telephone systems using local communication networks according to the present invention and other mobile telephone systems using local communication networks with reference to the accompanying drawings.

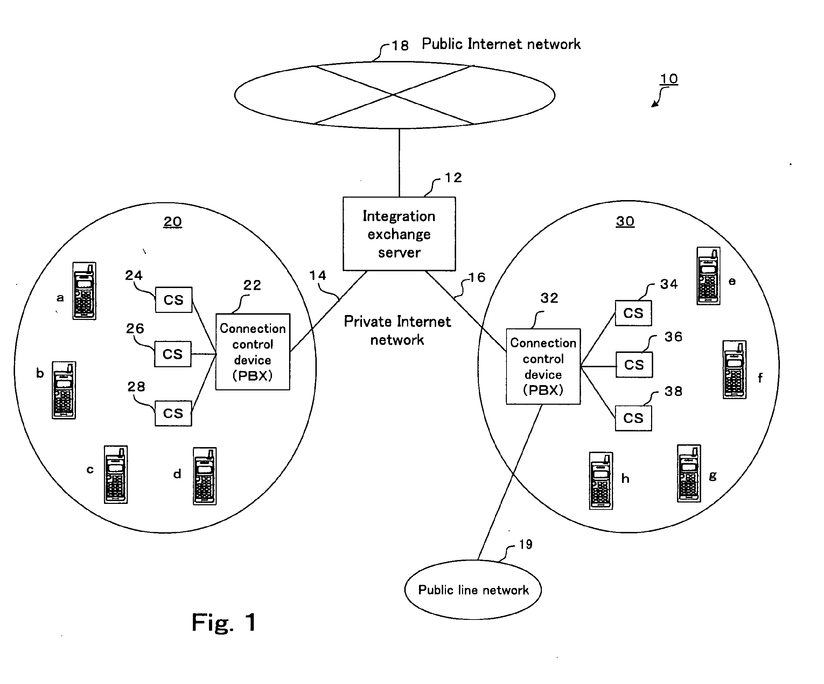

Fig. 1 is a drawing showing the configuration of a mobile telephone system using a plurality of local communication networks according to the first embodiment of the present invention. The mobile telephone system 10 according to the present invention is constituted by connection control devices (PBX) 22, 32 respectively installed in a plurality of local communication networks 20, 30, an integration exchange server 12 connected to the respective connection control devices 22, 32 via private Internet networks 14, 16, a plurality of communication stations (CSs) 24 to 28, 34 to 38, which are wire-connected to the respective connection control devices 22, 32 on the respective local communication networks 20, 30, and function as PHS-CS, and mobile terminals a to h, which function as PHS-PS.

If the destination of a call from the mobile terminals a to h is the mobile terminal of a subscriber to the mobile telephone system, the connection control devices 22, 32 installed on the respective local communication networks 20, 30 will connect the call to the destination mobile terminal via the connection control device of the communication station within the area where the call destination mobile terminal is located. If the call destination is a subscriber of a public line network, the connection control devices 22, 32 are configured to have functions such as address conversion for the call destination, and protocol conversion for communication data (described in detail below), and connection is made to the call destination via the public line network 19.

The integration exchange server 12 is connected to a public Internet network 18, and if the destination of a call from the mobile terminals a to h is an Internet telephone, the integration exchange server 12 is configured to provide control to connect to a gateway of the carrier to which the subscriber of the call destination subscribes via the public Internet network 18.

Existing local communication networks such as CATV communication networks (Cable Television communication network), broadband service networks, DSL (Digital Subscriber Line) and ADSL (Asymmetric Digital Subscriber Line) connection service networks provided by Internet providers can be utilized, and such other communication networks.

If the CATV communication network is used as the local communication network, the respective connection control devices 22, 32 may be simultaneously installed integrally with or independently of CATV servers, which transmit CATV data such as contents to be delivered to respective subscriber terminals (CATV adapters) of the local communication network, and in the same manner, the respective communication stations 24 to 28, 34 to 38 may be simultaneously installed integrally with or independently of the respective subscriber terminals.

Moreover, it is possible to cause the functions of the respective communication stations 24 to 28, 34 to 38 and CATV data reception processing functions as subscriber terminals to operate simultaneously by using vacant channels of the CATV service entity. It is also possible to provide a TV telephone service by mounting a CCD camera or the like on the subscriber terminal or a TV receiver, and simultaneously use the call function of the communication stations 24 to 28, 34 to 38 as parent devices, or the mobile terminals a to h.

The integration exchange server 12 has an IP address on the Internet and an upper layer communication function compliant with Internet protocol, and stores the IP addresses on the Internet of the respective connection control devices 22, 32, and local addresses of the respective communication stations 24 to 28, 34 to 38 within the respective local communication networks. It is provided with a location information database, which stores results of location registration carried out by the respective mobile terminals a to h to the communication stations 24 to 28, 34 to 38.

The connection control devices 22, 32 respectively hold an IP address on the Internet and serve to incorporate the upper layer compliant with Internet protocol used for communicating with the integration exchange server 12 and the communication stations 24 to 28, 34 to 38, and, transmit (relay) the results of the location registration carried out between the communication stations 24 to 28, 34 to 38 and the respective mobile terminals a to h to the integration exchange server 12.

Each of the communication stations 24 to 28, 34 to 38 holds several IP addresses, and is respectively provided with an upper layer compliant with Internet protocol used for communicating with the respective connection control devices 22, 32 and a lower layer compliant with radio communication protocol used for radio communication with the respective mobile terminals a to h. Moreover, each of the communication stations 24 to 28, 34 to 38 is provided with an IP address managing section which manages IP addresses used by the mobile terminals to which the connection is maintained, and simultaneously function as PHS-CS and as base stations which carry out the location registration for the respective mobile terminals a to h.

The mobile terminals a to h do not hold an IP address on the Internet, and do not need to be provided with the upper layer compliant with Internet protocol, and are merely equipped with the facility of communicating with the communication stations (CSs) 24 to 28, 34 to 38 functioning as the PHS-CS, as well as the function of location registration accorded to ordinary PHS-PS.

As mentioned above, the respective connection control devices 22, 32 may function as servers which provide services for subscribers to the local communication networks, i.e., servers added to the CATV servers for the CATV networks, or may be configured as independent devices operating side by side with CATV servers.

The respective communication stations (CSs) 24 to 28, 34 to 38 may serve as communication adaptors installed on the subscriber side on the local communication networks 20, 30 and configured in such manner as to be added to CATV adaptors for the CATV networks with an antenna for communicating and for location registration with the respective mobile terminals a to h, but do not necessarily have to be equipped with the calling function associated with PHS-CS.

A business unit operating the integration exchange server 12 and the connection control devices 22, 32 on the local communication networks must register and obtain a special permit to operate as a communication carrier, and would have to obtain an allocation of telephone numbers assigned to the mobile terminals a to h owned by the subscribers subscribing to the mobile telephone service of the present invention, which may possibly be applicable to the IP telephone number presently being studied under the Japan Nationwide Telephone Number Plan.

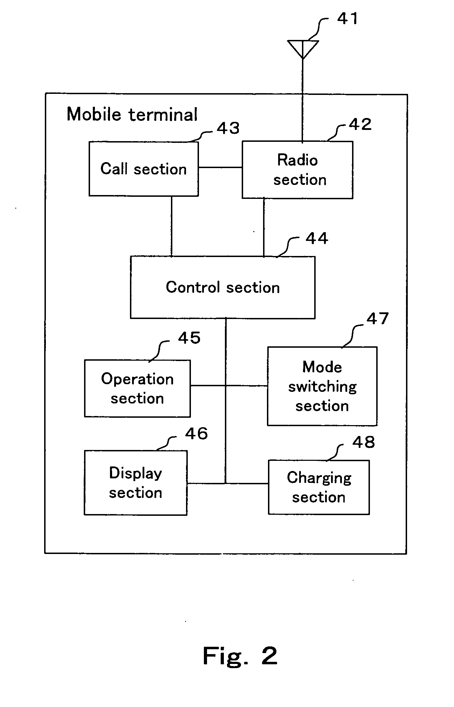

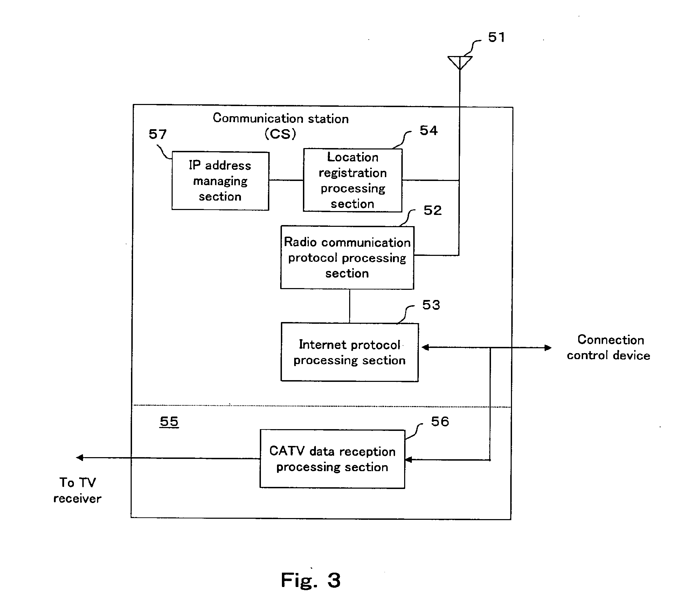

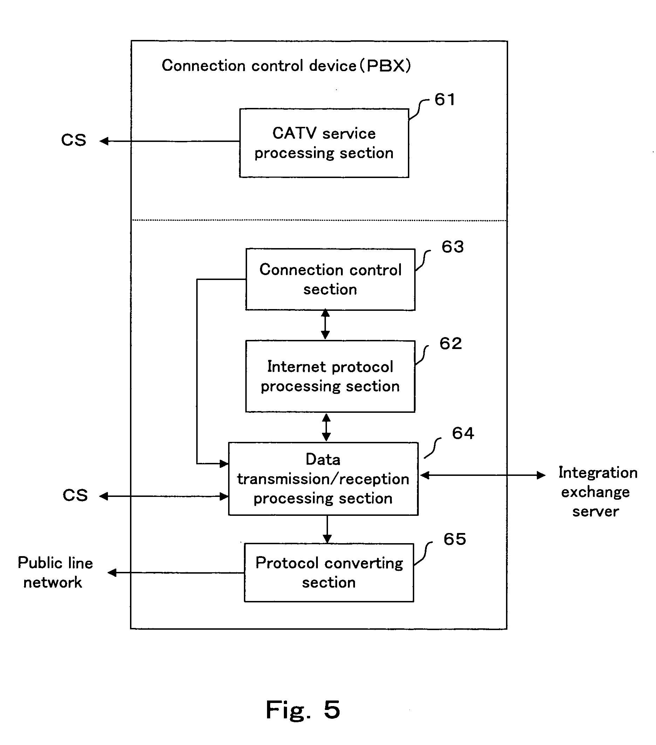

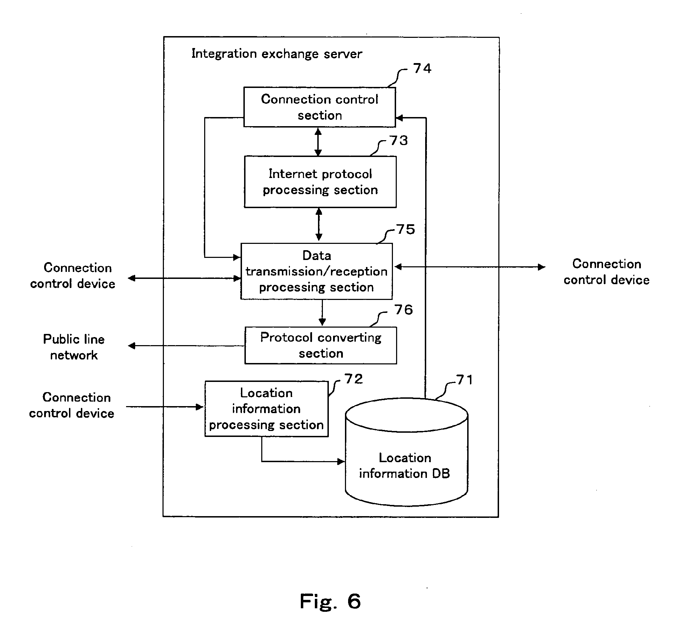

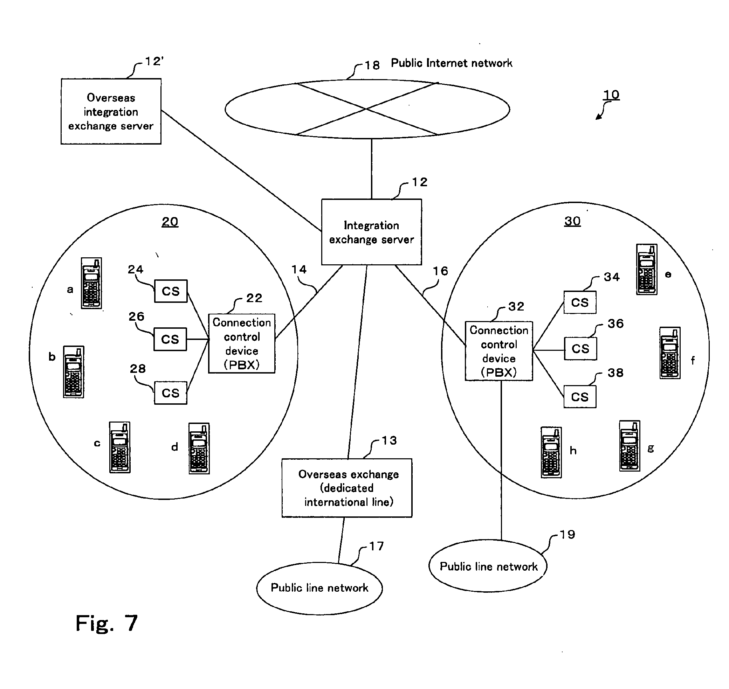

A description will now be given of the configuration and operation of the respective devices.
(1) Mobile terminal
   As shown in Fig. 2, the configuration of the mobile terminals a to h is similar to that of an ordinary PHS telephone, and is constituted by an antenna 41, a radio section 42, a call section 43, a control section 44, an operation section 45, a display section 46, a charging section 48, and a mode switching section 47. The functions and operations of the respective sections are exactly the same as those of the PHS telephone. Note that if it is dedicatedly used for the mobile telephone system, if the mobile terminal can operate only in the private mode, it has to operate in an IP mode (IP telephone mode) as a mobile terminal subscribing to the mobile telephone service as described below.
(2) Communication station (CS)
   The communication stations 24 to 28, 34 to 38 respectively hold a plurality of IP addresses within the vicinity of the local communication networks 20, 30, which can be used by the mobile terminals a to h which maintain connections by themselves. As shown in Fig. 3, the communication stations 24 to 28, 34 to 38 function as PHS-CS and are provided with a radio communication protocol processing section 52 and an antenna 51, which communicate with the mobile terminals in compliance with radio communication protocol, an Internet protocol processing section 53 which communicates with the connection control devices 22, 32 in compliance with Internet protocol, a location registration processing section 54 which registers the locations of the mobile terminals, and an IP address managing section 57 which manages the IP addresses used by the mobile terminals to which the connections are maintained.
   Information in the mobile terminals a to h situated within the vicinity of the respective communication stations 24 to 28, 34 to 38 is processed and transmitted by the location registration processing section 54 to the integration exchange server 12 via the respective connection control devices 22, 32, and is stored in the location information database. The processing of location registration is exactly similar to that of the ordinary mobile telephone and PHS telephone systems, and after the mobile terminals register the locations to the communication stations 24 to 28, 34 to 38, the mobile terminals enter the state of waiting for an incoming call. Moreover, even if the mobile terminals a to h are moved while a call is in progress, it is nevertheless possible to carry out the handover processing as in the conventional PHS system.
   The communication stations 24 to 28, 34 to 38 use the IP address managing section 57 to manage IP addresses temporarily assigned to and used by the mobile terminals maintaining the connection (outgoing call or incoming call) by themselves. For example, if the communication stations hold three IP addresses and use a specific IP address temporarily assigned to the mobile terminals a to h maintaining the connection through the communication stations 24 to 28, 34 to 38, they would be able to temporarily store the correspondence between the telephone number or a terminal device number of the mobile terminals maintaining the connection and the IP address assigned to the latter, thereby managing both of the assigned and free IP addresses. Consequently, the respective communication stations 24 to 28, 34 to 38 can connect to a plurality of mobile terminals by themselves in the form of time sharing.
   In general, the data communication rate between the connection control devices 22, 32 and the respective communication stations 24 to 28, 34 to 38 is 128 kbp/s, while the data communication rate between the communication stations 24 to 28, 34 to 38 and the respective mobile terminals a to h is 32 kbp/s, such that and the respective communication stations 24 to 28, 34 to 38 can use three slots of data communication channels in the form of time sharing. Accordingly, the communication stations 24 to 28, 34 to 38 are preferably configured to hold three IP addresses.
   It is not necessary to register the respective mobile terminals a to h in the respective communication stations 24 to 28, 34 to 38 as child devices, while the mobile terminals a to h can connect to the communication stations in the areas where the mobile terminals a to h are located. It is thus preferable that the user owning mobile terminals who himself has provided the communication stations be given priority in the offering of services. For this purpose, a priority control function is added by registering IDs (such as mobile terminal numbers) of the mobile terminals owned by the user who has installed the communication stations in the IP address managing section 57, and awarding a greater allocation of IP addresses for connection to these terminals.

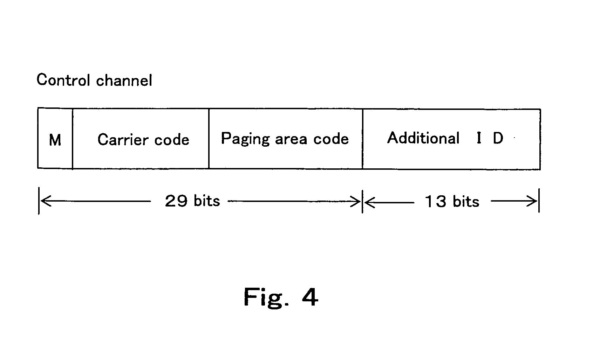

   Fig. 4 is a diagram showing the schematic configuration of a control channel frame in the communication between the mobile terminals a to h and the communication stations 24 to 28, 34 to 38. This control channel frame is constituted by a total of 29 bits including a mode switching bit M (the switch between the private mode and a public mode), a carrier code (the code of the communication carrier which provides the service), a paging area code, an outgoing call identification code including 13 bits of an additional ID, and an incoming call identification code (the code used for paging a destination mobile terminal) including 28 bits, which are not shown.
   If the mobile terminals a to h are to be operated as IP telephones according to the IP telephone service of the present invention, the mobile terminals a to h are switched to IP mode (IP telephone mode). The mobile terminals then mask the bits other than the carrier code and predetermined upper bits of the paging area code while waiting for an incoming call, and operate in the same manner as if they were in the private mode in the case of the outgoing call. The mode switching section 47 of the mobile terminals a to h switches among four modes: the public mode, the private mode, the IP mode (IP telephone mode), and the transceiver mode (radio call between the child devices). If the configuration provided is such that the public mode is not necessary, the only switching function required would be as between the private mode and the IP mode. As a result, the communication stations 24 to 28, 34 to 38 will recognize the mobile terminals a to h as child devices and offer connection control. Consequently, even if they move to another area, the mobile terminals can operate as child devices of the communication stations 24 to 28, 34 to 38 corresponding to the relevant areas.
   Since the mobile telephone system 10 according to the first embodiment uses the local communication networks such as CATV communication networks, the respective communication stations 24 to 28, 34 to 38 are additionally provided with the functions of a CATV data reception adaptor 55 including a CATV data reception processing section 56 which receives the CATV data and transmits the CATV data to the TV receiver.
   Thus, the communication stations 24 to 28, 34 to 38 are configured by adding the functions of the mobile telephone system (i.e., the functions performed by parent devices with respect to mobile terminals) to the communication adaptor (CATV adaptor) 55 installed in private homes and in public or private buildings for the respective CATV subscribers. Note that although the communication station in Fig. 3 shows the example of a communication station configured integrally with the CATV adaptor, the communication station and the CATV adaptor are not necessarily integrated with each other, but rather, are configured physically independent of each other as described above.
(3) Connection control device (PBX: Private Branch Exchange) The connection control devices 22, 32 are installed simultaneously with a CATV service processing section 61 which is used to transmit (serve) the CATV data to the communication stations 24 to 28, 34 to 38 added to the CATV adaptors which serve as the subscriber terminals installed on the subscriber side of the local communication networks. The connection control devices 22, 32 carry out the connection control of calls from and to the respective communication stations 24 to 28, 34 to 38 for the mobile terminals a to h which have registered the locations thereof in the communication stations within the corresponding local communication networks.
   As shown in Fig. 5, the respective connection control devices 22, 32 are thus provided with an Internet protocol processing section 62, which communicates with the integration exchange server 12 and the respective communication stations 24 to 28, 34 to 38 in compliance with Internet protocol and hold an IP address on the Internet. Furthermore, the respective connection control devices 22, 32 include a connection control section 63, which carries out connection control for the outgoing call from the mobile terminals a to h whose locations are registered in the respective communication stations 24 to 28, 34 to 38, as well as the incoming call to the mobile terminals a to h, a data transmission/reception processing section 64 which transmits/receives call data, and a protocol converting section 65 which converts the call data to the protocol on the PSTN for connection to subscribers (of fixed telephones and mobile telephones) of the public line network connection, who are not subscribers to the mobile telephone system.
   If a call is bound for the mobile terminals a to h whose locations are registered in the respective communication stations 24 to 28, 34 to 38 and which are in the state of waiting, the Internet protocol processing section 62 carries out connection control according to the IP address of the communication stations 24 to 28, 34 to 38 contained in the communication data (call data) transmitted by the integration exchange server 12, while the connection control section 63 transmits communication data (destination address in the case of a control channel and call data in the case of a data channel) to the corresponding communication stations 24 to 28, 34 to 38 via the data transmission/reception processing section 64.
   Alternatively, if a call is destined for a telephone subscriber of the public line network connection which is not a subscriber to the mobile telephone system, the connection control section 63 will thus carry out call destination address conversion processing, simultaneously causing the protocol converting section 65 to carry out control by converting the call data to call data compliant with protocol on the PSTN, and establish connection with the call destination via the public line network. The protocol converting function of an existing Internet telephone system and the like can be used for this purpose.
   If a call originates from the mobile terminals a to h within the vicinity of the respective communication stations 24 to 28, 34 to 38, the call data is transmitted to the integration exchange server 12 via the data transmission/reception processing section 64, and connection control is carried out on the integration exchange server 12 corresponding to the call destination. If the call destination is a subscriber to the mobile telephone system, control is carried out in the connection control devices 22, 32 in the corresponding areas based on the location information in the mobile telephone of the call destination.
   If the call destination is a telephone subscriber of the public line network connection, the connection reaches the public line network 19 via an overseas exchange (dedicated international line exchange) 13 shown in the extended system configuration of Fig. 7 or the connection control devices 22, 32 of the local communication networks closest to the call destination, and conversion of the connection destination (call destination) address is thus carried out for routing.
(4) Integration exchange server
   As shown in Fig. 6, the integration exchange server 12 is provided with a location information database (location information DB) 71, which stores the IP addresses of the connection control devices 22, 32 and the IP addresses within the local communication networks of the communication stations 24 to 28, 34 to 38, and simultaneously stores the results of the location registration processing carried out between the respective communication stations 24 to 28, 34 to 38 and the mobile terminals a to h. The location information on the respective mobile terminals a to h is collected from the communication stations 24 to 28, 34 to 38 in which the locations are registered via the respective connection control devices 22 to 32 to the integration exchange server 12, and is stored in the location information DB 71 by a location information processing section 72.

Moreover, the integration exchange server 12 is provided with an Internet protocol processing section 73, which communicates in compliance with Internet protocol with the respective connection control devices 22, 32, an integration exchange server 12' located abroad shown in Fig. 7 and described below, the public Internet network 18, the overseas exchange (dedicated international line exchange) 13, and the like, and holds an IP address on the Internet. Further, the integration exchange server 12 includes a connection control section 74, which carries out connection control for outgoing calls originating from the mobile terminals and incoming calls bound for the mobile terminals based on the location information in the respective mobile terminals a to h stored in the location information DB 71, and a data transmission/reception processing section 75, which carries out transmission/reception processing for the communication data transmitted/received via the respective connection control devices 22, 32, the integration exchange server 12' located abroad, the public Internet network 18, and the overseas exchange (dedicated international line exchange) 13.

Still further, the integration exchange server 12 is provided with a protocol converting section 76, which converts the call data to the PSTN protocol in respect of connection for a subscriber to the public line network connection who is not a subscriber to the mobile telephone system, and if there is an incoming call destined for such subscriber, the connection control section 74 carries out the call destination address conversion processing to establish connection to the public line network, and the protocol converting section 76 applies protocol conversion to the communication data being routed through the data transmission/reception processing section 75 so as to obtain communication data compliant with protocol on the PSTN, and sends out the communication data to the call destination via the public line network.

As described above, in the case of a call bound for the mobile terminals a to h whose locations are registered in the respective communication stations 24 to 28, 34 to 38, and which is in the state of waiting, the connection control section 74 retrieves the location information in the corresponding mobile terminals a to h from the location information database DB 71 based on the call destination address contained in the data received by the data transmission/reception processing section 75, identifies the connection control devices 22, 32 and the communication stations 24 to 28, 34 to 38 within the corresponding area in which the location is registered, carries out the routing, converts the call destination address, and transmits the data.

On the other hand, if a call is made from the mobile terminals a to h within the vicinity of the respective communication stations 24 to 28, 34 to 38, the connection control section 74 obtains the call destination address from data received by the data transmission/reception processing section 75, and carries out connection control corresponding to the call destination. If the call is destined for a subscriber to the mobile telephone system, the connection is similarly made to the connection control devices 24 to 28, 34 to 38 within the corresponding area based on the location information in the mobile terminal of the call destination in the afore described manner. If the call destination is a telephone subscriber of the public line network connection, conversion (routing) is made to the call destination address including the addresses of the devices through which the routings are made in order to connect to the public line network via the overseas exchange (dedicated international line exchange) 13 (refer to Fig. 7), or the connection control devices 24 to 28, 34 to 38 in the local communication network closest to the call destination.

Fig. 7 shows a diagram of the extended configuration of the mobile telephone system illustrated in Fig. 1, and, accordingly, it is possible to build a similar mobile telephone system abroad, and to connect the integration exchange server (abroad) 12' thereof and the domestic integration exchange server 12 with each other via an Internet network, thereby easily extending the coverage of the connection service. Moreover, with respect to the connection to be made by an international toll free call to a subscriber of the public line network connection who is not a subscriber to the mobile telephone system, a configuration may be provided for to establish connection to an overseas exchange installed by a dedicated international line provider abroad such as the dedicated international line exchange 13 in the United States via the Internet, as well as connection to the public line network 17 via the exchange 13 in the United States and to the destination subscriber.

A description will be given of the routing arranged by the call destination from the mobile terminals a to h such as the mobile terminal a in the above-described mobile telephone system 10.
(a) Call bound for a mobile terminal of the mobile telephone system
   If the call destination, such as the mobile terminal h, is located within the area of the communication station 38, and the location thereof is registered, the routing is represented as: the call origin mobile terminal a → the communication station 24 of the area where the call origin mobile terminal a is located → the connection control device 22 → the integration exchange server 12 → the connection control device 32 → the communication station 38 → the mobile terminal h. Communication between the mobile terminal a and the communication station 24, and communication between the communication station 38 and the mobile terminal h is carried out in compliance with radio communication protocol. The communication station 24 conducts protocol conversion to Internet protocol whereby communication compliant with Internet protocol is made from the communication station 24 to the communication station 38, and the communication station 38 in turn conducts protocol conversion from Internet protocol to radio communication protocol.
   In this case, the call charges between the mobile terminal a and the communication station 24 and between the communication station 38 and the mobile terminal h are free, as in the case of communication taking place in the ordinary private mode of the PHS. In fact, service can be provided almost for free for the following route: the communication station 24 → the connection control device 22 → the integration exchange server 12 → the connection control device 32 → the communication station 38, since existing local communication networks make this routing possible.
(b) Call bound for the fixed telephone of a subscriber to the public line network
   The routing is represented as follows: the call origin mobile terminal a → the communication station 24 → the connection control device 22 → the integration exchange server 12 → the communication control device of the area where the fixed telephone of the call destination is located (or the area closest thereto) such as the connection control device 32 → the public line network 19 → the fixed telephone call destination. As previously described, communication compliant with radio communication protocol ensues between the mobile terminal a and the communication station 24. Thereafter, communication compliant with Internet protocol takes place between the communication station 24 and the connection control device 32 which is closest to the call destination of the telephone subscriber, while protocol conversion from Internet protocol to protocol on the PSTN ensues from the point of connection to the public line network 19.
   In this case, as mentioned in the above, there is no call charge between the mobile terminal a and the communication station 24, while it is almost for free for the following route: the communication station 24 → the connection control device 22 → the integration exchange server 12 → the communication control device 32 of the area where the fixed telephone of the call destination is located, since existing local communication networks make this routing possible. The call charge approximates that of the local call charge via the public line network 19.
(c) Call bound for a mobile telephone subscribing to the public line network
   The routing is represented as the call origin mobile terminal a → the communication station 24 → the connection control device 22 → the integration exchange server 12 → the overseas exchange 13 installed by the dedicated international line provider such as one providing the international toll free call → the public line network 17 → the call destination mobile telephone. As previously described, communication compliant with radio communication protocol ensues between the mobile terminal a and the communication station 24. Thereafter, communication compliant with Internet protocol takes place between the communication station 24 and the overseas exchange 13 while protocol conversion from Internet protocol to protocol on the PSTN ensues from the point of connection to the public line network 17.
   In this case, as mentioned in the above, there is no call charge between the mobile terminal a and the communication station 24, while it is almost for free for the following route: the communication station 24 → the connection control device 22 → the integration exchange server 12 → the overseas exchange 13, and the call charge approximates that which is set by the dedicated international line provider.
(d) Call bound for an Internet telephone (IP telephone)
   The routing of calls bound for an IP telephone is represented as follows: the mobile terminal a of the call origin → the communication station 24 of the area where the mobile terminal a of the call origin is located → the connection control device 22 → the integration exchange server 12 → the public Internet network 18 → the gateway of a provider to which the IP telephone terminal of the call destination subscribes → the destination IP telephone terminal. Likewise, communication compliant with radio communication protocol ensues between the mobile terminal a and the communication station 24. Thereafter, communication compliant with Internet protocol takes place between the communication station 24 and the IP telephone terminal of the call destination.

Similarly, as previously stated, the call charge between the mobile terminal a and the communication station 24 is free, while the Internet telephone call charge will apply to the following route: the communication station 24 → the connection control device 22 → the integration exchange server 12 → the public Internet network 18 → the gateway of the provider to which the IP telephone terminal of the call destination subscribes →the IP telephone terminal of the call destination.

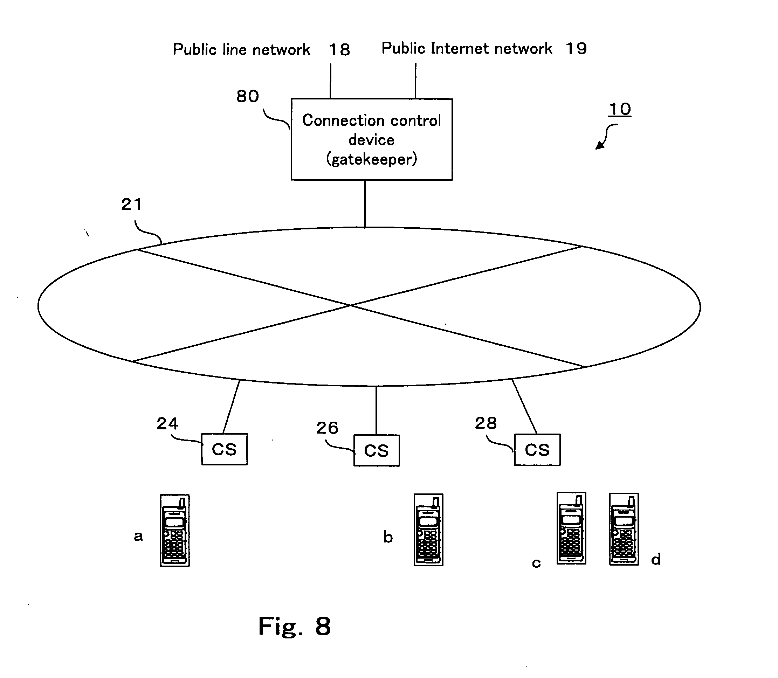

Fig. 8 is a diagram of the configuration of the mobile telephone system 10 using a local communication network according to a second embodiment of the present invention, in which the communication stations (CSs) 24 to 28 and the mobile terminals a to d in the first embodiment are applied to a local communication network 21 provided by an Internet provider such as an ADSL connection service network in the present embodiment.

The configuration of the respective mobile terminals a to d as indicated in Fig. 8 is similar to that shown in Fig. 2, and thus a description of the functions and operations thereof has been omitted. However, although the configuration of the communication stations (CSs) 24 to 28 is basically similar to the illustration made in Fig. 3, since the present embodiment does not require the presence of a local communication network such as a CATV communication network, the CATV reception adaptor 55 is not necessary and was therefore not drawn in Fig. 8. Otherwise, the configuration, functions, and operations of the communication stations (CSs) 24 to 28 resemble those of Fig. 3.

Naturally, however, if a CATV network were to be used, it may be simultaneously installed with a personal computer which transmits data communication via the Internet by means of the ADSL connection, and the CATV reception adaptor 55 may be replaced by an ADSL communication adaptor.

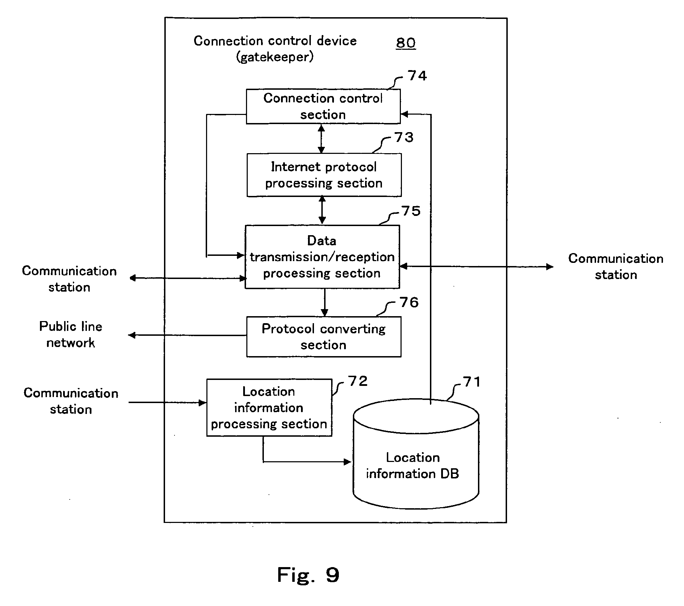

As shown in Fig. 9, a connection control device (gatekeeper) 80 is provided with the location information database (location information DB) 71, which stores the IP addresses of the communication stations 24 to 28 and the IP addresses of the communication stations 24 to 28, and simultaneously stores results of the location registration processing carried out between the respective communication stations 24 to 28 and the mobile terminals a to h. The location information on the respective mobile terminals a to h is collected from the respective communication stations 24 to 28, which have conveyed the location registrations to the connection control device (gatekeeper) 80, and is stored into the location information DB 71 through the location information processing section 72.

Moreover, the connection control device (gatekeeper) 80 is provided with an Internet protocol processing section 73, which carries out the communication in compliance with Internet protocol with the respective communication stations 24 to 28 or the public Internet network 18, the public line network 19, and the like, and holds an IP address, which is an address on the Internet. Further, the connection control device (gatekeeper) 80 includes a connection control section 74, which carries out connection control for outgoing calls originating from the mobile terminals and incoming calls bound for the mobile terminals based on the location information in the respective mobile terminals a to h stored in the location information DB 71 and the data transmission/reception processing section 75, which carries out transmission/reception processing for communication data transmitted/received via the respective communication stations 24 to 28 or the public Internet network 18 and the public line network 19.

Still further, the connection control device (gatekeeper) 80 is provided with a protocol converting section 76, which converts the call data in compliance with PSTN protocol for connection to a subscriber to the public line network connection, who is not a subscriber to the mobile telephone system, and if there is an incoming call bound for the telephone of the subscriber, the connection control section 74 carries out the call destination address conversion processing, thereby establishing the connection to the public line network 18, and the protocol converting section 76 applies the protocol conversion to communication data being routed through the data transmission/reception processing section 75 so as to obtain communication data compliant with PSTN protocol, and sends out the communication data to the call destination via the public line network 18. The functions and operations of the connection control device (gatekeeper) 80 are basically the same as those of the integration exchange server 12 according to the embodiment shown in Fig. 1, and the description thereof has therefore been omitted.

According to this mobile telephone system 10, by installing a large number of the communication stations 24 to 28, local communication network providers such as Internet providers can easily provide Internet telephone service at low call charges. If either the local communication network 20 or 30 in the system of Fig. 1 solely provides this mobile telephone service, the local communication network 20 or 30 would have a system configuration similar to that drawn in Fig. 8.

Note that if the local communication network whose services are provided by an Internet provider is integrated into the mobile telephone system of Fig. 8, a system similar to that of the mobile telephone system of Fig. 1 can be built by substituting the functions of the connection control devices (gatekeepers) 80 of the respective communication networks with the connection control devices 22, 32 of Fig. 4, and installing the integration exchange server 12 of Fig. 6 for the purpose of integrating the respective local communication networks.

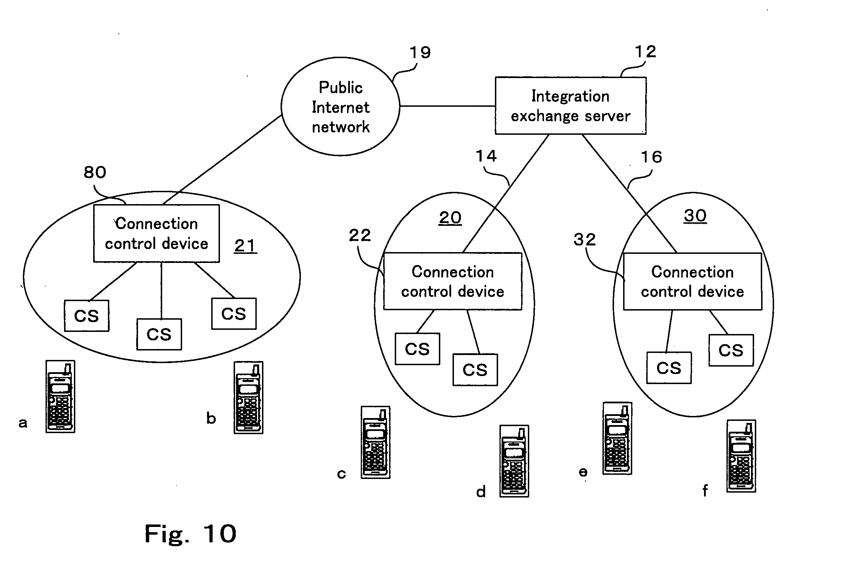

Fig. 10 is a diagram of the system configuration which transmits a call between the mobile telephone system according to the first embodiment shown in Fig. 1, and the mobile telephone system according to the second embodiment shown in Fig. 8. As shown in Fig. 10, the integration exchange server 12 and the connection control device (gatekeeper) 80 can mutually connect calls between the mobile terminals a to f via connection points on the public Internet network 19 in the mobile telephone system where the local communication networks 20 and 30 and the like are integrated by the integration exchange server 12 and the mobile telephone system where the ADSL connection service network 21 provided by the Internet provider is used as local communication network.

In this case, different communication carriers operate their respective mobile telephone systems, and the mobile terminals which subscribe to one communication carrier cannot as yet connect to the communication stations CSs provided by another communication carrier. For example, the mobile terminals a, b cannot connect to the communication stations CSs installed on the local communication networks 20, 30, and the mobile terminals c to f cannot connect to the communication stations CSs installed on the local communication network 21 of Fig. 10. Notably, however, if the area coverage of the local communication networks of both systems overlap with each other and their communication stations CSs are installed close to each other, connections can be made to the respective communication stations CSs, and calls are not obstructed.

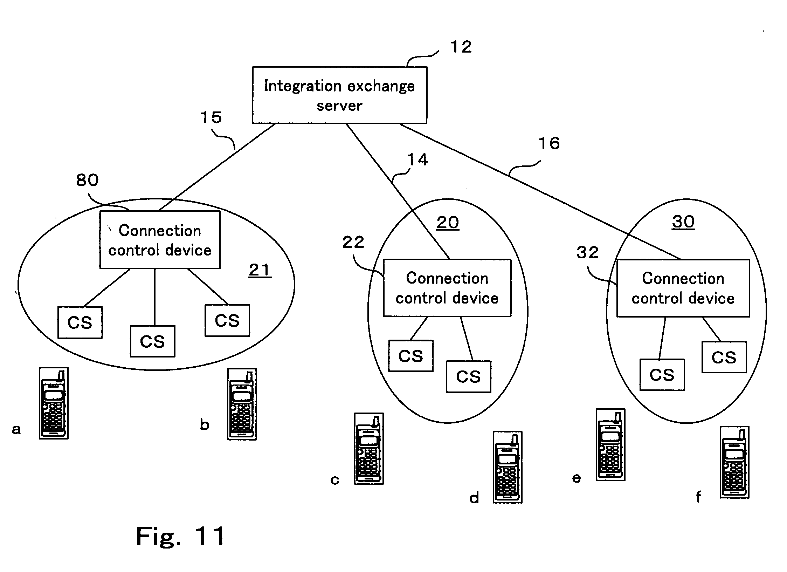

Fig. 11 is a diagram of the configuration of a mobile telephone system which further integrates the mobile telephone system according to the first embodiment shown in Fig. 1, and the mobile telephone system according to the second embodiment shown in Fig. 8. In this system, even if different communication carriers operate their respective mobile telephone systems (as shown in Fig. 11), the communication control device (gate keeper) 80 may be connected to the integration exchange server 12 via the private Internet network 15, and the location registration information in the respective mobile terminals a to h (mobile terminals subscribing to both mobile telephone systems) may be collated together in the integration exchange server 12. In this case, the integration exchange server 12 should preferably be installed and operated nationwide.

As described above, according to the mobile telephone system of the first embodiment of the present invention, the call charge is free between the respective mobile terminals and the respective communication stations as in the case of communication carried out in the ordinary PHS private mode, and the call charge is almost free or extremely low along the communication stations → the connection control device 22 → the integration exchange server 12 → the connection control device 32 → the communication stations, since communication is carried out in compliance with Internet protocol.

According to the mobile telephone system of the second embodiment of the present invention, by installing a large number of the communication stations 22 to 26, local communication network providers such as Internet providers can easily provide Internet telephone service at low call charges.

Moreover, according to the mobile telephone systems of the first and second embodiments of the present invention, the respective mobile terminals do not need to hold an IP address, do not need the upper layer processing section for making the communication with communication stations compliant with Internet protocol, and do not entail considerable expense. Furthermore, since the mobile terminals do not hold an IP address, and the management of the IP addresses is controlled upstream by the integration exchange server and connection control devices, the number of mobile terminals to which such services may be provided need not be restricted, and it is thus possible to increase the number of mobile terminals and communication stations that may be installed. Further, it is not necessary to carry out registration of child devices between the mobile terminals and the communication stations. Further still, it is possible to extend the paging area of the respective communication stations and to reduce the frequency by which the mobile terminals register the location thereof as well as the frequency with which the mobile terminals run out of battery.

## Claims

1. A mobile telephone system using a local communication network comprising: connection control devices which are respectively installed on a plurality of local communication networks; an integration exchange server which is connected to the said respective connection control devices via a private Internet network; a plurality of communication stations which function as PHS-CS and are wire-connected to the said respective connection control devices and installed along with a subscriber terminal of a local communication network; and a plurality of mobile terminals which function as PHS-PS, **characterized in that**:
each of the said mobile terminals comprises a radio section and a communication section which carry out communication at least with the said communication stations in compliance with a radio communication protocol;
each of the said communication stations comprises a location registration processing section which carries out location registration processing for the particular mobile terminal located within the vicinity thereof, a radio communication protocol processing section which communicates with the said mobile terminal in compliance with radio communication protocol, an Internet protocol processing section which communicates with the said connection control device in compliance with Internet protocol;
each of the said connection control devices comprises an Internet protocol processing section which holds an IP address on the Internet, and communicates with the said respective communication stations and the said integration exchange server in compliance with Internet protocol, and a connection control section which carries out connection control based on communication data emanating from the said communication station or the said integration exchange server; and
the said integration exchange server comprises a location information database which stores the IP address of the said connection control devices, the IP addresses of the said respective communication stations, and location information in the said respective mobile terminals, an Internet protocol processing section which communicates with the said respective connection control devices in compliance with Internet protocol, and a connection control section which carries out connection control based on communication data coming from the said connection control device, and carries out connection control based on location information in the said mobile terminal obtained from the said location information database based on existing communication data.

2. The mobile telephone system using the local communication network according to claim 1, **characterized in that** the said connection control device further comprises a protocol converting section which converts the communication data from the said communication station or said integration exchange server to data compliant with a protocol on the PSTN, thereby causing the said connection control section to establish connection with a call destination routing through a public line network.

3. The mobile telephone system using the local communication network according to claim 1, **characterized in that** the said integration exchange server is further configured to be connected to a public Internet network, and if the call destination is an Internet telephone, the said connection control section can connect to the call destination routing through the public Internet network.

4. The mobile telephone system using the local communication network according to claim 1, **characterized in that** the said integration exchange server is further configured to be connected to an overseas exchange installed by a dedicated international line provider, and if the call destination is a mobile telephone of a public line network subscriber, the said connection control section can connect to the call destination routing through the public line network via overseas exchange.

5. The mobile telephone system using the local communication network according to claim 1, **characterized in that** the said integration exchange server is further connected to the integration exchange server installed abroad via a private Internet network.

6. The mobile telephone system using the local communication network according to claim 1, **characterized in that** the said communication station carries out handover processing if the said mobile terminal is moved while a call is in progress.

7. The mobile telephone system using the local communication network according to claim 1, **characterized in that** the said local communication network is a CATV communication network.

8. The mobile telephone system using a local communication network according to claim 7, **characterized in that** the said communication station comprises a CATV data reception processing section which transmits CATV data to a TV receiver.

9. The mobile telephone system using a local communication network according to claim 7, **characterized in that** the said connection control device comprises a CATV service processing section which transmits CATV data to the subscriber terminal and the said communication station.

10. A mobile telephone system using a local communication network comprising: a connection control device which is installed in a local communication network; a plurality of communication stations which are connected to the said connection control device via an Internet network and function as PHS-CS; and a plurality of mobile terminals which function as PHS-PS, **characterized in that**:
each of the said mobile terminals comprises a radio section and a communication section which carry out communication at least with the said communication stations in compliance with radio communication protocol;
each of the said communication stations comprises a location registration processing section carries out location registration processing for the particular mobile terminal located within the vicinity thereof, a radio communication protocol processing section that communicates with the said mobile terminal in compliance with radio communication protocol, an Internet protocol processing section which communicates with the said connection control device in compliance with Internet protocol;
the said connection control device comprises a location information database which stores the IP address of the particular communication station and location information in the said respective mobile terminals, an Internet protocol processing section which communicates with the said respective connection control devices in compliance with Internet protocol, and a connection control section which carries out connection control according to communication data from the particular communication station, and carries out connection control based on the location information in the particular mobile terminal obtained from the said location information database based on existing communication data.

11. The mobile telephone system using a local communication network according to either claim 1 or 10, **characterized in that** the said communication stations respectively comprise an IP address managing section that manages a plurality of IP addresses which are assigned to the said respective communication stations for use by the said mobile terminals which communicate with each other via the said corresponding communication stations.

12. The mobile telephone system using a local communication network according to either claim 1 or 10, **characterized in that** the said mobile terminal further comprises a mode switching section, and if the said mobile terminal selects an IP mode by means of the said mode switching section, the said mobile terminal receives control channel information transmitted from the said communication station while the control channel information is masked at a predetermined bit position.
